# EUROPEAN PATENT SPECIFICATION

(11) **EP 4 602 330 B1**
(45) Date of publication and mention of the grant of the patent: **04.11.2026**
(21) Application number: 23801128.2
(22) Date of filing: 09.10.2023
(51) Int. Cl.: G01C 21/34

(54) **PATH SELECTION FOR REMOTE VEHICLE ASSISTANCE**
WEGAUSWAHL FÜR ENTFERNTE FAHRZEUGUNTERSTÜTZUNG
SÉLECTION DE TRAJET POUR ASSISTANCE À DISTANCE DE VÉHICULE

(30) Priority: 14.10.2022 US 202263379600 P; 31.01.2023 US 202318162256
(43) Date of publication of application: 20.08.2025
(73) Proprietor: Motional AD LLC, Boston, MA 02210 (US)
(72) Inventor: SRIDHARAN, Rohit, Boston, Massachusetts 02210 (US); BUTRON, Gregory Scott, Boston, Massachusetts 02210 (US); SHACKLOCK, Andrew, Boston, Massachusetts 02210 (US); ROBLES, Kelvin, Boston, Massachusetts 02210 (US)
(74) Representative: Fish & Richardson P.C.
(86) International application number: PCT/US2023/034741
(87) International publication number: WO 2024/081191

(56) References cited:
- US-A1- 2013 103 313
- US-A1- 2018 196 437
- US-A1- 2021 269 056

## Description

### CROSS-REFERENCE TO RELATED APPLICATION

This application claims the benefit of priority from U.S. Provisional Application No. 63/379,600, filed October 14, 2022, and U.S. Patent Application No. 18/162,256, filed January 31, 2023.

### BACKGROUND

An autonomous vehicle may be capable of sensing its surrounding environment and navigating to a goal location with minimal to no human input. In some situations, the autonomous vehicle may become stuck and unable to navigate autonomously to the goal location. Remote vehicle assistance systems can determine and provide alternate navigable paths to assist the autonomous vehicle as it operates from the stuck location toward the goal location. Determining acceptable alternate paths that the autonomous vehicle can rapidly implement can be challenging.

US 2013/103313 A1 generates navigation routes on a map based on a starting point and a destination point. A user can view multiple candidate routes on a graphical user interface and select one for navigation. The graphical user interface displays route information such as travel time and traffic indicators, allowing the user to compare candidate routes before selecting one. When a route is selected, the system provides the corresponding navigation instructions to guide the vehicle along the chosen route.

US 2021 /269056 A1 describes a lane-based routing system for autonomous vehicles that identifies road segments and lane paths between a source and target location, calculates an effective distance for each lane path based on lane characteristics and traffic elements, and selects the lane path with the lowest effective distance for route planning.

### BRIEF DESCRIPTION OF THE FIGURES

FIG. 1 is an example environment in which a vehicle including one or more components of an autonomous system can be implemented;
FIG. 2 is a diagram of one or more systems of a vehicle including an autonomous system;
FIG. 3 is a diagram of components of one or more devices and/or one or more systems of FIGS. 1 and 2;
FIG. 4A is a diagram of certain components of an autonomous system;
FIG. 4B is a diagram of an implementation of a neural network;
FIG. 5 is a diagram of an implementation of a process for remote vehicle assistance by a remote vehicle assistance system;
FIG. 6 is a diagram of a detailed implementation of a remote vehicle assistance system;
FIG. 7 is a flowchart of a process for remote vehicle assistance path selection;
FIG. 8 is a diagram of an example dataflow executed by the remote vehicle assistance system described herein;
FIGS. 9A and 9B illustrate embodiments of user interfaces of the remote vehicle assistance system described herein;
FIG. 10 illustrates an embodiment of a user interface of the remote vehicle assistance system described herein showing one or more detected objects;
FIG. 11 illustrates another embodiment of a user interface of the remote vehicle assistance system described herein showing one or more costs associated with the detected objects of FIG. 10;
FIG. 12 illustrates another embodiment of a user interface of the remote vehicle assistance system described herein showing another embodiment of one or more costs associated with the detected objects of FIG. 10;
FIG. 13 illustrates another embodiment of a user interface of the remote vehicle assistance system showing a path determined and provided to avoid a detected object as described herein;
FIG. 14 illustrates another embodiment of a user interface of the remote vehicle assistance system showing sensor data and a vehicle path as described herein; and
FIG. 15 illustrates another embodiment of a user interface of the remote vehicle assistance system showing sensor data, RVA operator data, and path selection as described herein.

### DETAILED DESCRIPTION

In the following description numerous specific details are set forth in order to provide a thorough understanding of the present disclosure for the purposes of explanation. It will be apparent, however, that the embodiments described by the present disclosure can be practiced without these specific details. In some instances, well-known structures and devices are illustrated in block diagram form in order to avoid unnecessarily obscuring aspects of the present disclosure.

Specific arrangements or orderings of schematic elements, such as those representing systems, devices, modules, instruction blocks, data elements, and/or the like are illustrated in the drawings for ease of description. However, it will be understood by those skilled in the art that the specific ordering or arrangement of the schematic elements in the drawings is not meant to imply that a particular order or sequence of processing, or separation of processes, is required unless explicitly described as such. Further, the inclusion of a schematic element in a drawing is not meant to imply that such element is required in all embodiments or that the features represented by such element may not be included in or combined with other elements in some embodiments unless explicitly described as such.

Further, where connecting elements such as solid or dashed lines or arrows are used in the drawings to illustrate a connection, relationship, or association between or among two or more other schematic elements, the absence of any such connecting elements is not meant to imply that no connection, relationship, or association can exist. In other words, some connections, relationships, or associations between elements are not illustrated in the drawings so as not to obscure the disclosure. In addition, for ease of illustration, a single connecting element can be used to represent multiple connections, relationships or associations between elements. For example, where a connecting element represents communication of signals, data, or instructions (e.g., "software instructions"), it should be understood by those skilled in the art that such element can represent one or multiple signal paths (e.g., a bus), as may be needed, to affect the communication.

Although the terms first, second, third, and/or the like are used to describe various elements, these elements should not be limited by these terms. The terms first, second, third, and/or the like are used only to distinguish one element from another. For example, a first contact could be termed a second contact and, similarly, a second contact could be termed a first contact without departing from the scope of the described embodiments. The first contact and the second contact are both contacts, but they are not the same contact.

The terminology used in the description of the various described embodiments herein is included for the purpose of describing particular embodiments only and is not intended to be limiting. As used in the description of the various described embodiments and the appended claims, the singular forms "a," "an" and "the" are intended to include the plural forms as well and can be used interchangeably with "one or more" or "at least one," unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description specify the presence of stated features, integers, steps, operations, elements, and/or components, but do not preclude the presence or addition of one or more other features, integers, steps, operations, elements, components, and/or groups thereof.

As used herein, the terms "communication" and "communicate" refer to at least one of the reception, receipt, transmission, transfer, provision, and/or the like of information (or information represented by, for example, data, signals, messages, instructions, commands, and/or the like). For one unit (e.g., a device, a system, a component of a device or system, combinations thereof, and/or the like) to be in communication with another unit means that the one unit is able to directly or indirectly receive information from and/or send (e.g., transmit) information to the other unit. This may refer to a direct or indirect connection that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and transmits the processed information to the second unit. In some embodiments, a message may refer to a network packet (e.g., a data packet and/or the like) that includes data.

As used herein, the term "if" is, optionally, construed to mean "when", "upon", "in response to determining," "in response to detecting," and/or the like, depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," and/or the like, depending on the context. Also, as used herein, the terms "has", "have", "having", or the like are intended to be openended terms. Further, the phrase "based on" is intended to mean "based at least partially on" unless explicitly stated otherwise.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments can be practiced without these specific details. In other instances, well-known methods, procedures, components, circuits, and networks have not been described in detail so as not to unnecessarily obscure aspects of the embodiments.

### General Overview

### The present invention is defined by the appended claims.

A remote vehicle assistance (RVA) system can enable a remote human operator (RHO) to provide optimized paths to a vehicle that is stuck and no longer able to autonomously navigate. The system can include tools to allow the RHO to create, visualize, and manipulate existing or new candidate paths that are optimized based on costs and constraints associated with a candidate path. An candidate path can be verified as an acceptable trajectory and implemented as a navigable path by the vehicle.

Some of the advantages of the RVA system include providing a dynamic graphical user interface (HMI) for an RHO to plan, select, and provide optimized paths to the vehicle during RVA. The RVA system can reduce the amount of time for generating and implementing a candidate path so that the vehicle can continue autonomous navigation more quickly, thus enhancing safety, as well as the overall user experience. The techniques and methods implemented by the RVA system can reduce the rate at which a vehicle may reject a path provided by the RHO by improving the accuracy of the selected path.

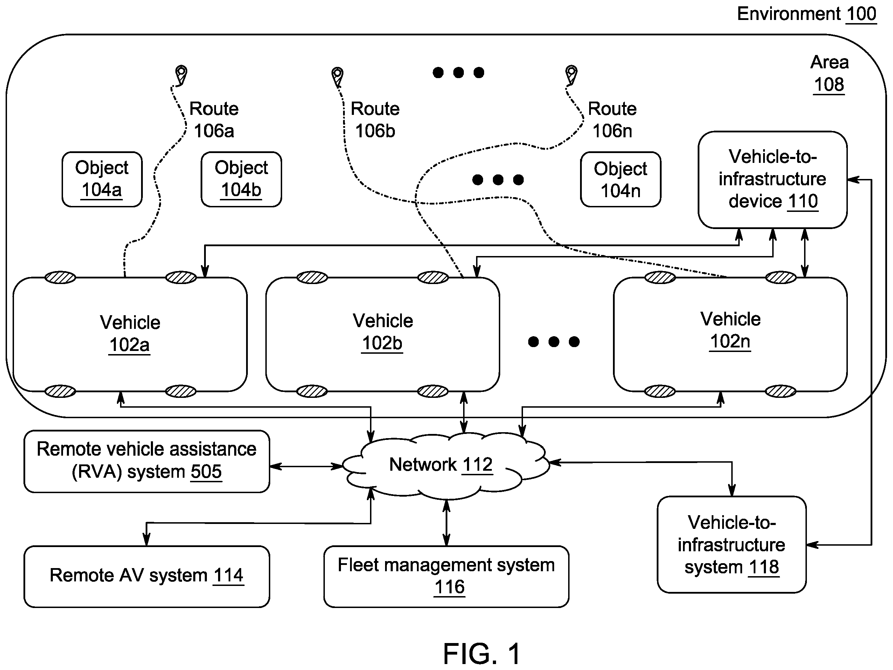

Referring now to FIG. 1, illustrated is example environment 100 in which vehicles that include autonomous systems, as well as vehicles that do not, are operated. As illustrated, environment 100 includes vehicles 102a-102n, objects 104a-104n, routes 106a-106n, area 108, vehicle-to-infrastructure (V2I) device 110, network 112, remote autonomous vehicle (AV) system 114, fleet management system 116, and V2I system 118. Vehicles 102a-102n, vehicle-to-infrastructure (V2I) device 110, network 112, autonomous vehicle (AV) system 114, fleet management system 116, and V21 system 118 interconnect (e.g., establish a connection to communicate and/or the like) via wired connections, wireless connections, or a combination of wired or wireless connections. In some embodiments, objects 104a-104n interconnect with at least one of vehicles 102a-102n, vehicle-to-infrastructure (V2I) device 110, network 112, autonomous vehicle (AV) system 114, fleet management system 116, and V2I system 118 via wired connections, wireless connections, or a combination of wired or wireless connections.

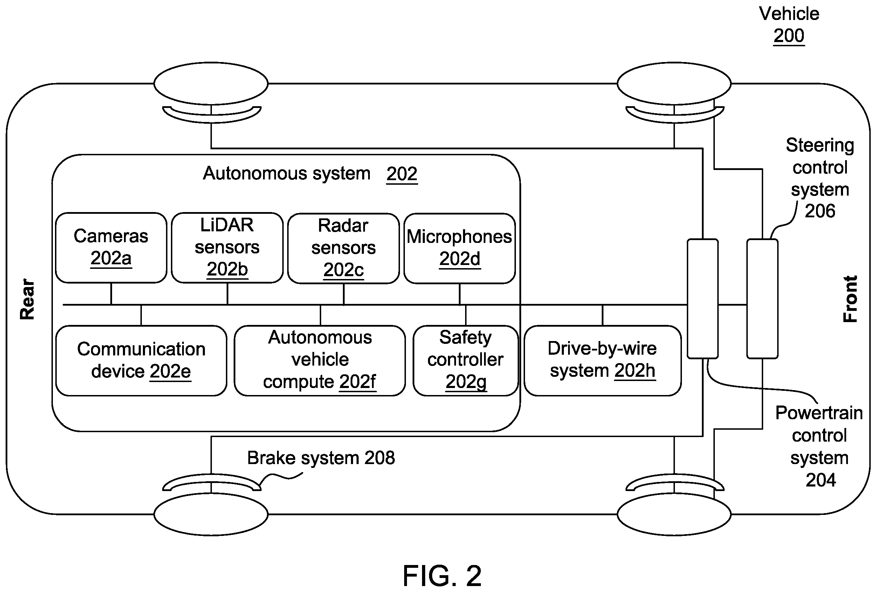

Vehicles 102a-102n (referred to individually as vehicle 102 and collectively as vehicles 102) include at least one device configured to transport goods and/or people. In some embodiments, vehicles 102 are configured to be in communication with V2I device 110, remote AV system 114, fleet management system 116, and/or V2I system 118 via network 112. In some embodiments, vehicles 102 include cars, buses, trucks, trains, and/or the like. In some embodiments, vehicles 102 are the same as, or similar to, vehicles 200, described herein (see FIG. 2). In some embodiments, a vehicle 200 of a set of vehicles 200 is associated with an autonomous fleet manager. In some embodiments, vehicles 102 travel along respective routes 106a-106n (referred to individually as route 106 and collectively as routes 106), as described herein. In some embodiments, one or more vehicles 102 include an autonomous system (e.g., an autonomous system that is the same as or similar to autonomous system 202).

Objects 104a-104n (referred to individually as object 104 and collectively as objects 104) include, for example, at least one vehicle, at least one pedestrian, at least one cyclist, at least one structure (e.g., a building, a sign, a fire hydrant, etc.), and/or the like. Each object 104 is stationary (e.g., located at a fixed location for a period of time) or mobile (e.g., having a velocity and associated with at least one trajectory). In some embodiments, objects 104 are associated with corresponding locations in area 108.

Routes 106a-106n (referred to individually as route 106 and collectively as routes 106) are each associated with (e.g., prescribe) a sequence of actions (also known as a trajectory) connecting states along which an AV can navigate. Each route 106 starts at an initial state (e.g., a state that corresponds to a first spatiotemporal location, velocity, and/or the like) and a final goal state (e.g., a state that corresponds to a second spatiotemporal location that is different from the first spatiotemporal location) or goal region (e.g. a subspace of acceptable states (e.g., terminal states)). In some embodiments, the first state includes a location at which an individual or individuals are to be picked-up by the AV and the second state or region includes a location or locations at which the individual or individuals picked-up by the AV are to be dropped-off. In some embodiments, routes 106 include a plurality of acceptable state sequences (e.g., a plurality of spatiotemporal location sequences), the plurality of state sequences associated with (e.g., defining) a plurality of trajectories. In an example, routes 106 include only high level actions or imprecise state locations, such as a series of connected roads dictating turning directions at roadway intersections. Additionally, or alternatively, routes 106 may include more precise actions or states such as, for example, specific target lanes or precise locations within the lane areas and targeted speed at those positions. In an example, routes 106 include a plurality of precise state sequences along the at least one high level action sequence with a limited lookahead horizon to reach intermediate goals, where the combination of successive iterations of limited horizon state sequences cumulatively correspond to a plurality of trajectories that collectively form the high level route to terminate at the final goal state or region.

Area 108 includes a physical area (e.g., a geographic region) within which vehicles 102 can navigate. In an example, area 108 includes at least one state (e.g., a country, a province, an individual state of a plurality of states included in a country, etc.), at least one portion of a state, at least one city, at least one portion of a city, etc. In some embodiments, area 108 includes at least one named thoroughfare (referred to herein as a "road") such as a highway, an interstate highway, a parkway, a city street, etc. Additionally, or alternatively, in some examples area 108 includes at least one unnamed road such as a driveway, a section of a parking lot, a section of a vacant and/or undeveloped lot, a dirt path, etc. In some embodiments, a road includes at least one lane (e.g., a portion of the road that can be traversed by vehicles 102). In an example, a road includes at least one lane associated with (e.g., identified based on) at least one lane marking.

Vehicle-to-Infrastructure (V21) device 110 (sometimes referred to as a Vehicle-to-Infrastructure (V2X) device) includes at least one device configured to be in communication with vehicles 102 and/or V2I infrastructure system 118. In some embodiments, V2I device 110 is configured to be in communication with vehicles 102, remote AV system 114, fleet management system 116, and/or V21 system 118 via network 112. In some embodiments, V2I device 110 includes a radio frequency identification (RFID) device, signage, cameras (e.g., two-dimensional (2D) and/or three-dimensional (3D) cameras), lane markers, streetlights, parking meters, etc. In some embodiments, V2I device 110 is configured to communicate directly with vehicles 102. Additionally, or alternatively, in some embodiments V2I device 110 is configured to communicate with vehicles 102, remote AV system 114, and/or fleet management system 116 via V2I system 118. In some embodiments, V2I device 110 is configured to communicate with V2I system 118 via network 112.

Network 112 includes one or more wired and/or wireless networks. In an example, network 112 includes a cellular network (e.g., a long term evolution (LTE) network, a third generation (3G) network, a fourth generation (4G) network, a fifth generation (5G) network, a code division multiple access (CDMA) network, etc.), a public land mobile network (PLMN), a local area network (LAN), a wide area network (WAN), a metropolitan area network (MAN), a telephone network (e.g., the public switched telephone network (PSTN), a private network, an ad hoc network, an intranet, the Internet, a fiber optic-based network, a cloud computing network, etc., a combination of some or all of these networks, and/or the like.

Remote AV system 114 includes at least one device configured to be in communication with vehicles 102, V21 device 110, network 112, remote AV system 114, fleet management system 116, and/or V2I system 118 via network 112. In an example, remote AV system 114 includes a server, a group of servers, and/or other like devices. In some embodiments, remote AV system 114 is co-located with the fleet management system 116. In some embodiments, remote AV system 114 is involved in the installation of some or all of the components of a vehicle, including an autonomous system, an autonomous vehicle compute, software implemented by an autonomous vehicle compute, and/or the like. In some embodiments, remote AV system 114 maintains (e.g., updates and/or replaces) such components and/or software during the lifetime of the vehicle.

Fleet management system 116 includes at least one device configured to be in communication with vehicles 102, V2I device 110, remote AV system 114, and/or V2I infrastructure system 118. In an example, fleet management system 116 includes a server, a group of servers, and/or other like devices. In some embodiments, fleet management system 116 is associated with a ridesharing company (e.g., an organization that controls operation of multiple vehicles (e.g., vehicles that include autonomous systems and/or vehicles that do not include autonomous systems) and/or the like).

In some embodiments, V2I system 118 includes at least one device configured to be in communication with vehicles 102, V21 device 110, remote AV system 114, and/or fleet management system 116 via network 112. In some examples, V2I system 118 is configured to be in communication with V21 device 110 via a connection different from network 112. In some embodiments, V2I system 118 includes a server, a group of servers, and/or other like devices. In some embodiments, V2I system 118 is associated with a municipality or a private institution (e.g., a private institution that maintains V2I device 110 and/or the like).

The number and arrangement of elements illustrated in FIG. 1 are provided as an example. There can be additional elements, fewer elements, different elements, and/or differently arranged elements, than those illustrated in FIG. 1. Additionally, or alternatively, at least one element of environment 100 can perform one or more functions described as being performed by at least one different element of FIG. 1. Additionally, or alternatively, at least one set of elements of environment 100 can perform one or more functions described as being performed by at least one different set of elements of environment 100. In some embodiments, a remote vehicle assistance (RVA) system 505 can be included in the environment 100. The remote vehicle assistance system 505 can be configured within a vehicle 102 or external to a vehicle 102. In some embodiments, first portions of the remote vehicle assistance system 505 can be configured within a vehicle 102 and second portions of the remote vehicle assistance system 505 can be configured external to a vehicle 102.

Referring now to FIG. 2, vehicle 200 includes autonomous system 202, powertrain control system 204, steering control system 206, and brake system 208. In some embodiments, vehicle 200 is the same as or similar to vehicle 102 (see FIG. 1). In some embodiments, vehicle 200 can correspond to any one of vehicles 102. In some embodiments, vehicles 102 have autonomous capability (e.g., implement at least one function, feature, device, and/or the like that enable vehicle 200 to be partially or fully operated without human intervention including, without limitation, fully autonomous vehicles (e.g., vehicles that forego reliance on human intervention), highly autonomous vehicles (e.g., vehicles that forego reliance on human intervention in certain situations), and/or the like). For a detailed description of fully autonomous vehicles and highly autonomous vehicles, reference may be made to SAE International's standard J3016: Taxonomy and Definitions for Terms Related to On-Road Motor Vehicle Automated Driving Systems. In some embodiments, vehicle 200 is associated with an autonomous fleet manager and/or a ridesharing company.

Autonomous system 202 includes a sensor suite that includes one or more devices such as cameras 202a, LiDAR sensors 202b, radar sensors 202c, and microphones 202d. In some embodiments, autonomous system 202 can include more or fewer devices and/or different devices (e.g., ultrasonic sensors, inertial sensors, GPS receivers (discussed below), odometry sensors that generate data associated with an indication of a distance that vehicle 200 has traveled, and/or the like). In some embodiments, autonomous system 202 uses the one or more devices included in autonomous system 202 to generate data associated with environment 100, described herein. The data generated by the one or more devices of autonomous system 202 can be used by one or more systems described herein to observe the environment (e.g., environment 100) in which vehicle 200 is located. In some embodiments, autonomous system 202 includes communication device 202e, autonomous vehicle compute 202f, and drive-by-wire (DBW) system 202h.

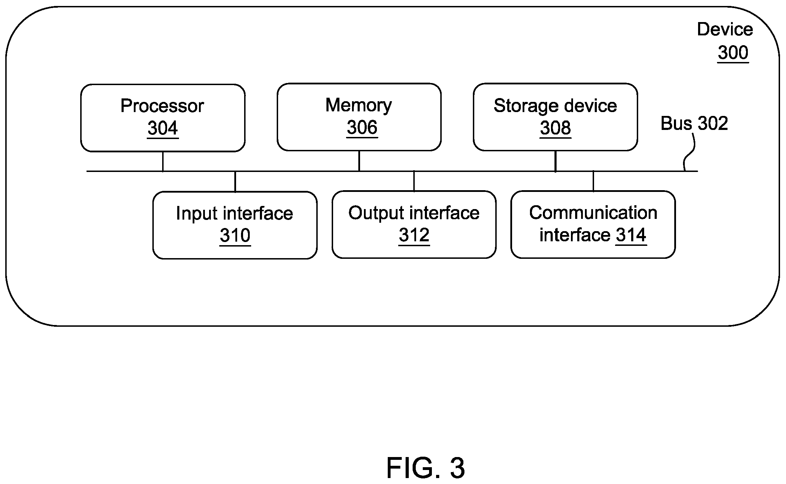

Cameras 202a include at least one device configured to be in communication with communication device 202e, autonomous vehicle compute 202f, and/or safety controller 202g via a bus (e.g., a bus that is the same as or similar to bus 302 of FIG. 3). Cameras 202a include at least one camera (e.g., a digital camera using a light sensor such as a charge-coupled device (CCD), a thermal camera, an infrared (IR) camera, an event camera, and/or the like) to capture images including physical objects (e.g., cars, buses, curbs, people, and/or the like). In some embodiments, camera 202a generates camera data as output. In some examples, camera 202a generates camera data that includes image data associated with an image. In this example, the image data may specify at least one parameter (e.g., image characteristics such as exposure, brightness, etc., an image timestamp, and/or the like) corresponding to the image. In such an example, the image may be in a format (e.g., RAW, JPEG, PNG, and/or the like). In some embodiments, camera 202a includes a plurality of independent cameras configured on (e.g., positioned on) a vehicle to capture images for the purpose of stereopsis (stereo vision). In some examples, camera 202a includes a plurality of cameras that generate image data and transmit the image data to autonomous vehicle compute 202f and/or a fleet management system (e.g., a fleet management system that is the same as or similar to fleet management system 116 of FIG. 1). In such an example, autonomous vehicle compute 202f determines depth to one or more objects in a field of view of at least two cameras of the plurality of cameras based on the image data from the at least two cameras. In some embodiments, cameras 202a is configured to capture images of objects within a distance from cameras 202a (e.g., up to 100 meters, up to a kilometer, and/or the like). Accordingly, cameras 202a include features such as sensors and lenses that are optimized for perceiving objects that are at one or more distances from cameras 202a.

In an embodiment, camera 202a includes at least one camera configured to capture one or more images associated with one or more traffic lights, street signs and/or other physical objects that provide visual navigation information. In some embodiments, camera 202a generates traffic light data associated with one or more images. In some examples, camera 202a generates TLD data associated with one or more images that include a format (e.g., RAW, JPEG, PNG, and/or the like). In some embodiments, camera 202a that generates TLD data differs from other systems described herein incorporating cameras in that camera 202a can include one or more cameras with a wide field of view (e.g., a wide-angle lens, a fish-eye lens, a lens having a viewing angle of approximately 120 degrees or more, and/or the like) to generate images about as many physical objects as possible.

Laser Detection and Ranging (LiDAR) sensors 202b include at least one device configured to be in communication with communication device 202e, autonomous vehicle compute 202f, and/or safety controller 202g via a bus (e.g., a bus that is the same as or similar to bus 302 of FIG. 3). LiDAR sensors 202b include a system configured to transmit light from a light emitter (e.g., a laser transmitter). Light emitted by LiDAR sensors 202b include light (e.g., infrared light and/or the like) that is outside of the visible spectrum. In some embodiments, during operation, light emitted by LiDAR sensors 202b encounters a physical object (e.g., a vehicle) and is reflected back to LiDAR sensors 202b. In some embodiments, the light emitted by LiDAR sensors 202b does not penetrate the physical objects that the light encounters. LiDAR sensors 202b also include at least one light detector which detects the light that was emitted from the light emitter after the light encounters a physical object. In some embodiments, at least one data processing system associated with LiDAR sensors 202b generates an image (e.g., a point cloud, a combined point cloud, and/or the like) representing the objects included in a field of view of LiDAR sensors 202b. In some examples, the at least one data processing system associated with LiDAR sensor 202b generates an image that represents the boundaries of a physical object, the surfaces (e.g., the topology of the surfaces) of the physical object, and/or the like. In such an example, the image is used to determine the boundaries of physical objects in the field of view of LiDAR sensors 202b.

Radio Detection and Ranging (radar) sensors 202c include at least one device configured to be in communication with communication device 202e, autonomous vehicle compute 202f, and/or safety controller 202g via a bus (e.g., a bus that is the same as or similar to bus 302 of FIG. 3). Radar sensors 202c include a system configured to transmit radio waves (either pulsed or continuously). The radio waves transmitted by radar sensors 202c include radio waves that are within a predetermined spectrum In some embodiments, during operation, radio waves transmitted by radar sensors 202c encounter a physical object and are reflected back to radar sensors 202c. In some embodiments, the radio waves transmitted by radar sensors 202c are not reflected by some objects. In some embodiments, at least one data processing system associated with radar sensors 202c generates signals representing the objects included in a field of view of radar sensors 202c. For example, the at least one data processing system associated with radar sensor 202c generates an image that represents the boundaries of a physical object, the surfaces (e.g., the topology of the surfaces) of the physical object, and/or the like. In some examples, the image is used to determine the boundaries of physical objects in the field of view of radar sensors 202c.

Microphones 202d includes at least one device configured to be in communication with communication device 202e, autonomous vehicle compute 202f, and/or safety controller 202g via a bus (e.g., a bus that is the same as or similar to bus 302 of FIG. 3). Microphones 202d include one or more microphones (e.g., array microphones, external microphones, and/or the like) that capture audio signals and generate data associated with (e.g., representing) the audio signals. In some examples, microphones 202d include transducer devices and/or like devices. In some embodiments, one or more systems described herein can receive the data generated by microphones 202d and determine a position of an object relative to vehicle 200 (e.g., a distance and/or the like) based on the audio signals associated with the data.

Communication device 202e include at least one device configured to be in communication with cameras 202a, LiDAR sensors 202b, radar sensors 202c, microphones 202d, autonomous vehicle compute 202f, safety controller 202g, and/or DBW system 202h. For example, communication device 202e may include a device that is the same as or similar to communication interface 314 of FIG. 3. In some embodiments, communication device 202e includes a vehicle-to-vehicle (V2V) communication device (e.g., a device that enables wireless communication of data between vehicles).

Autonomous vehicle compute 202f include at least one device configured to be in communication with cameras 202a, LiDAR sensors 202b, radar sensors 202c, microphones 202d, communication device 202e, safety controller 202g, and/or DBW system 202h. In some examples, autonomous vehicle compute 202f includes a device such as a client device, a mobile device (e.g., a cellular telephone, a tablet, and/or the like) a server (e.g., a computing device including one or more central processing units, graphical processing units, and/or the like), and/or the like. In some embodiments, autonomous vehicle compute 202f is the same as or similar to autonomous vehicle compute 400, described herein. Additionally, or alternatively, in some embodiments autonomous vehicle compute 202f is configured to be in communication with an autonomous vehicle system (e.g., an autonomous vehicle system that is the same as or similar to remote AV system 114 of FIG. 1), a fleet management system (e.g., a fleet management system that is the same as or similar to fleet management system 116 of FIG. 1), a V2I device (e.g., a V2I device that is the same as or similar to V2I device 110 of FIG. 1), and/or a V2I system (e.g., a V2I system that is the same as or similar to V21 system 118 of FIG. 1).

Safety controller 202g includes at least one device configured to be in communication with cameras 202a, LiDAR sensors 202b, radar sensors 202c, microphones 202d, communication device 202e, autonomous vehicle computer 202f, and/or DBW system 202h. In some examples, safety controller 202g includes one or more controllers (electrical controllers, electromechanical controllers, and/or the like) that are configured to generate and/or transmit control signals to operate one or more devices of vehicle 200 (e.g., powertrain control system 204, steering control system 206, brake system 208, and/or the like). In some embodiments, safety controller 202g is configured to generate control signals that take precedence over (e.g., overrides) control signals generated and/or transmitted by autonomous vehicle compute 202f.

DBW system 202h includes at least one device configured to be in communication with communication device 202e and/or autonomous vehicle compute 202f. In some examples, DBW system 202h includes one or more controllers (e.g., electrical controllers, electromechanical controllers, and/or the like) that are configured to generate and/or transmit control signals to operate one or more devices of vehicle 200 (e.g., powertrain control system 204, steering control system 206, brake system 208, and/or the like). Additionally, or alternatively, the one or more controllers of DBW system 202h are configured to generate and/or transmit control signals to operate at least one different device (e.g., a turn signal, headlights, door locks, windshield wipers, and/or the like) of vehicle 200.

Powertrain control system 204 includes at least one device configured to be in communication with DBW system 202h. In some examples, powertrain control system 204 includes at least one controller, actuator, and/or the like. In some embodiments, powertrain control system 204 receives control signals from DBW system 202h and powertrain control system 204 causes vehicle 200 to start moving forward, stop moving forward, start moving backward, stop moving backward, accelerate in a direction, decelerate in a direction, perform a left turn, perform a right turn, and/or the like. In an example, powertrain control system 204 causes the energy (e.g., fuel, electricity, and/or the like) provided to a motor of the vehicle to increase, remain the same, or decrease, thereby causing at least one wheel of vehicle 200 to rotate or not rotate.

Steering control system 206 includes at least one device configured to rotate one or more wheels of vehicle 200. In some examples, steering control system 206 includes at least one controller, actuator, and/or the like. In some embodiments, steering control system 206 causes the front two wheels and/or the rear two wheels of vehicle 200 to rotate to the left or right to cause vehicle 200 to turn to the left or right.

Brake system 208 includes at least one device configured to actuate one or more brakes to cause vehicle 200 to reduce speed and/or remain stationary. In some examples, brake system 208 includes at least one controller and/or actuator that is configured to cause one or more calipers associated with one or more wheels of vehicle 200 to close on a corresponding rotor of vehicle 200. Additionally, or alternatively, in some examples brake system 208 includes an automatic emergency braking (AEB) system, a regenerative braking system, and/or the like.

In some embodiments, vehicle 200 includes at least one platform sensor (not explicitly illustrated) that measures or infers properties of a state or a condition of vehicle 200. In some examples, vehicle 200 includes platform sensors such as a global positioning system (GPS) receiver, an inertial measurement unit (IMU), a wheel speed sensor, a wheel brake pressure sensor, a wheel torque sensor, an engine torque sensor, a steering angle sensor, and/or the like.

Referring now to FIG. 3, illustrated is a schematic diagram of a device 300. As illustrated, device 300 includes processor 304, memory 306, storage component 308, input interface 310, output interface 312, communication interface 314, and bus 302. In some embodiments, device 300 corresponds to at least one device of vehicles 102 (e.g., at least one device of a system of vehicles 102), at least one device of the remote vehicle assistance system 505, and/or one or more devices of network 112 (e.g., one or more devices of a system of network 112). In some embodiments, one or more devices of vehicles 102 (e.g., one or more devices of a system of vehicles 102), one or more devices of the remote vehicle assistance system 505, and/or one or more devices of network 112 (e.g., one or more devices of a system of network 112) include at least one device 300 and/or at least one component of device 300. As shown in FIG. 3, device 300 includes bus 302, processor 304, memory 306, storage component 308, input interface 310, output interface 312, and communication interface 314.

Bus 302 includes a component that permits communication among the components of device 300. In some embodiments, processor 304 is implemented in hardware, software, or a combination of hardware and software. In some examples, processor 304 includes a processor (e.g., a central processing unit (CPU), a graphics processing unit (GPU), an accelerated processing unit (APU), and/or the like), a microphone, a digital signal processor (DSP), and/or any processing component (e.g., a field-programmable gate array (FPGA), an application specific integrated circuit (ASIC), and/or the like) that can be programmed to perform at least one function. Memory 306 includes random access memory (RAM), read-only memory (ROM), and/or another type of dynamic and/or static storage device (e.g., flash memory, magnetic memory, optical memory, and/or the like) that stores data and/or instructions for use by processor 304.

Storage component 308 stores data and/or software related to the operation and use of device 300. In some examples, storage component 308 includes a hard disk (e.g., a magnetic disk, an optical disk, a magneto-optic disk, a solid state disk, and/or the like), a compact disc (CD), a digital versatile disc (DVD), a floppy disk, a cartridge, a magnetic tape, a CD-ROM, RAM, PROM, EPROM, FLASH-EPROM, NV-RAM, and/or another type of computer readable medium, along with a corresponding drive.

Input interface 310 includes a component that permits device 300 to receive information, such as via user input (e.g., a touchscreen display, a keyboard, a keypad, a mouse, a button, a switch, a microphone, a camera, and/or the like). Additionally or alternatively, in some embodiments input interface 310 includes a sensor that senses information (e.g., a global positioning system (GPS) receiver, an accelerometer, a gyroscope, an actuator, and/or the like). Output interface 312 includes a component that provides output information from device 300 (e.g., a display, a speaker, one or more light-emitting diodes (LEDs), and/or the like).

In some embodiments, communication interface 314 includes a transceiver-like component (e.g., a transceiver, a separate receiver and transmitter, and/or the like) that permits device 300 to communicate with other devices via a wired connection, a wireless connection, or a combination of wired and wireless connections. In some examples, communication interface 314 permits device 300 to receive information from another device and/or provide information to another device. In some examples, communication interface 314 includes an Ethernet interface, an optical interface, a coaxial interface, an infrared interface, a radio frequency (RF) interface, a universal serial bus (USB) interface, a Wi-Fi^{®} interface, a cellular network interface, and/or the like.

In some embodiments, device 300 performs one or more processes described herein. Device 300 performs these processes based on processor 304 executing software instructions stored by a computer-readable medium, such as memory 305 and/or storage component 308. A computer-readable medium (e.g., a non-transitory computer readable medium) is defined herein as a non-transitory memory device. A non-transitory memory device includes memory space located inside a single physical storage device or memory space spread across multiple physical storage devices.

In some embodiments, software instructions are read into memory 306 and/or storage component 308 from another computer-readable medium or from another device via communication interface 314. When executed, software instructions stored in memory 306 and/or storage component 308 cause processor 304 to perform one or more processes described herein. Additionally or alternatively, hardwired circuitry is used in place of or in combination with software instructions to perform one or more processes described herein. Thus, embodiments described herein are not limited to any specific combination of hardware circuitry and software unless explicitly stated otherwise.

Memory 306 and/or storage component 308 includes data storage or at least one data structure (e.g., a database and/or the like). Device 300 is capable of receiving information from, storing information in, communicating information to, or searching information stored in the data storage or the at least one data structure in memory 306 or storage component 308. In some examples, the information includes network data, input data, output data, or any combination thereof.

In some embodiments, device 300 is configured to execute software instructions that are either stored in memory 306 and/or in the memory of another device (e.g., another device that is the same as or similar to device 300). As used herein, the term "module" refers to at least one instruction stored in memory 306 and/or in the memory of another device that, when executed by processor 304 and/or by a processor of another device (e.g., another device that is the same as or similar to device 300) cause device 300 (e.g., at least one component of device 300) to perform one or more processes described herein. In some embodiments, a module is implemented in software, firmware, hardware, and/or the like.

The number and arrangement of components illustrated in FIG. 3 are provided as an example. In some embodiments, device 300 can include additional components, fewer components, different components, or differently arranged components than those illustrated in FIG. 3. Additionally or alternatively, a set of components (e.g., one or more components) of device 300 can perform one or more functions described as being performed by another component or another set of components of device 300.

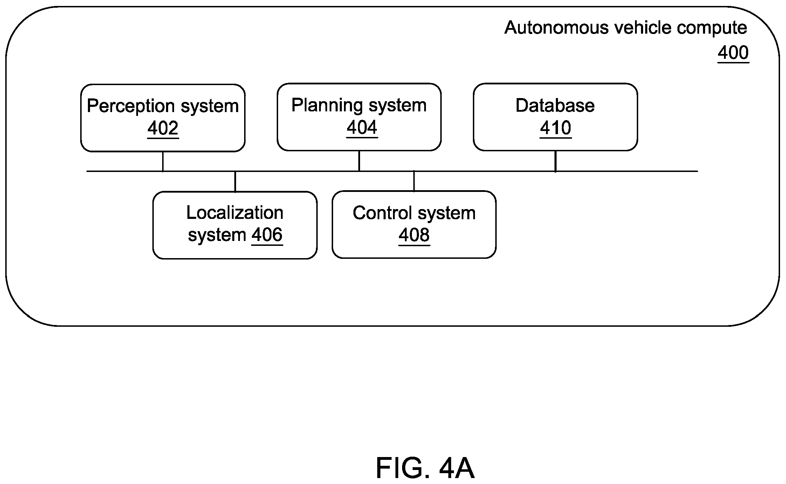

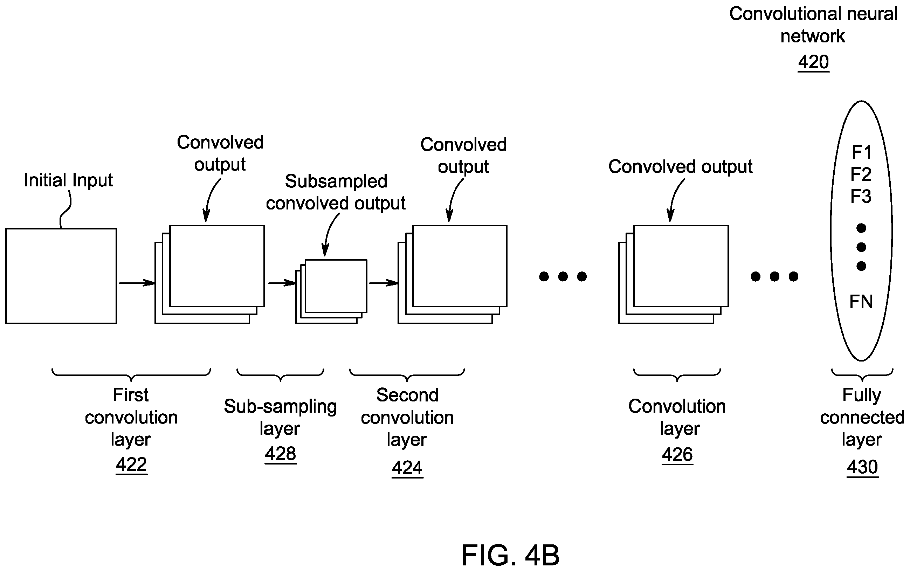

Referring now to FIG. 4, illustrated is an example block diagram of an autonomous vehicle compute 400 (sometimes referred to as an "AV stack"). As illustrated, autonomous vehicle compute 400 includes perception system 402 (sometimes referred to as a perception module), planning system 404 (sometimes referred to as a planning module), localization system 406 (sometimes referred to as a localization module), control system 408 (sometimes referred to as a control module), and database 410. In some embodiments, perception system 402, planning system 404, localization system 406, control system 408, and database 410 are included and/or implemented in an autonomous navigation system of a vehicle (e.g., autonomous vehicle compute 202f of vehicle 200). Additionally, or alternatively, in some embodiments perception system 402, planning system 404, localization system 406, control system 408, and database 410 are included in one or more standalone systems (e.g., one or more systems that are the same as or similar to autonomous vehicle compute 400 and/or the like). In some examples, perception system 402, planning system 404, localization system 406, control system 408, and database 410 are included in one or more standalone systems that are located in a vehicle and/or at least one remote system as described herein. In some embodiments, any and/or all of the systems included in autonomous vehicle compute 400 are implemented in software (e.g., in software instructions stored in memory), computer hardware (e.g., by microprocessors, microcontrollers, application-specific integrated circuits [ASICs], Field Programmable Gate Arrays (FPGAs), and/or the like), or combinations of computer software and computer hardware. It will also be understood that, in some embodiments, autonomous vehicle compute 400 is configured to be in communication with a remote system (e.g., an autonomous vehicle system that is the same as or similar to remote AV system 114, a fleet management system 116 that is the same as or similar to fleet management system 116, a V2I system that is the same as or similar to V2I system 118, and/or the like).

In some embodiments, perception system 402 receives data associated with at least one physical object (e.g., data that is used by perception system 402 to detect the at least one physical object) in an environment and classifies the at least one physical object. In some examples, perception system 402 receives image data captured by at least one camera (e.g., cameras 202a), the image associated with (e.g., representing) one or more physical objects within a field of view of the at least one camera. In such an example, perception system 402 classifies at least one physical object based on one or more groupings of physical objects (e.g., bicycles, vehicles, traffic signs, pedestrians, and/or the like). In some embodiments, perception system 402 transmits data associated with the classification of the physical objects to planning system 404 based on perception system 402 classifying the physical objects.

In some embodiments, planning system 404 receives data associated with a destination and generates data associated with at least one route (e.g., routes 106) along which a vehicle (e.g., vehicles 102) can travel along toward a destination. In some embodiments, planning system 404 periodically or continuously receives data from perception system 402 (e.g., data associated with the classification of physical objects, described above) and planning system 404 updates the at least one trajectory or generates at least one different trajectory based on the data generated by perception system 402. In some embodiments, planning system 404 receives data associated with an updated position of a vehicle (e.g., vehicles 102) from localization system 406 and planning system 404 updates the at least one trajectory or generates at least one different trajectory based on the data generated by localization system 406.

In some embodiments, localization system 406 receives data associated with (e.g., representing) a location of a vehicle (e.g., vehicles 102) in an area. In some examples, localization system 406 receives LiDAR data associated with at least one point cloud generated by at least one LiDAR sensor (e.g., LiDAR sensors 202b). In certain examples, localization system 406 receives data associated with at least one point cloud from multiple LiDAR sensors and localization system 406 generates a combined point cloud based on each of the point clouds. In these examples, localization system 406 compares the at least one point cloud or the combined point cloud to two-dimensional (2D) and/or a three-dimensional (3D) map of the area stored in database 410. Localization system 406 then determines the position of the vehicle in the area based on localization system 406 comparing the at least one point cloud or the combined point cloud to the map. In some embodiments, the map includes a combined point cloud of the area generated prior to navigation of the vehicle. In some embodiments, maps include, without limitation, high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations thereof), and maps describing the spatial locations of road features such as crosswalks, traffic signs or other travel signals of various types. In some embodiments, the map is generated in real-time based on the data received by the perception system.

In another example, localization system 406 receives Global Navigation Satellite System (GNSS) data generated by a global positioning system (GPS) receiver. In some examples, localization system 406 receives GNSS data associated with the location of the vehicle in the area and localization system 406 determines a latitude and longitude of the vehicle in the area. In such an example, localization system 406 determines the position of the vehicle in the area based on the latitude and longitude of the vehicle. In some embodiments, localization system 406 generates data associated with the position of the vehicle. In some examples, localization system 406 generates data associated with the position of the vehicle based on localization system 406 determining the position of the vehicle. In such an example, the data associated with the position of the vehicle includes data associated with one or more semantic properties corresponding to the position of the vehicle.

In some embodiments, control system 408 receives data associated with at least one trajectory from planning system 404 and control system 408 controls operation of the vehicle. In some examples, control system 408 receives data associated with at least one trajectory from planning system 404 and control system 408 controls operation of the vehicle by generating and transmitting control signals to cause a powertrain control system (e.g., DBW system 202h, powertrain control system 204, and/or the like), a steering control system (e.g., steering control system 206), and/or a brake system (e.g., brake system 208) to operate. In an example, where a trajectory includes a left turn, control system 408 transmits a control signal to cause steering control system 206 to adjust a steering angle of vehicle 200, thereby causing vehicle 200 to turn left. Additionally, or alternatively, control system 408 generates and transmits control signals to cause other devices (e.g., headlights, turn signal, door locks, windshield wipers, and/or the like) of vehicle 200 to change states.

In some embodiments, perception system 402, planning system 404, localization system 406, and/or control system 408 implement at least one machine learning model (e.g., at least one multilayer perceptron (MLP), at least one convolutional neural network (CNN), at least one recurrent neural network (RNN), at least one autoencoder, at least one transformer, and/or the like). In some examples, perception system 402, planning system 404, localization system 406, control system 408, and/or the remote vehicle assistance system 505 implement at least one machine learning model alone or in combination with one or more of the above-noted systems. In some examples, perception system 402, planning system 404, localization system 406, control system 408, and/or the remote vehicle assistance system 505 implement at least one machine learning model as part of a pipeline (e.g., a pipeline for identifying one or more objects located in an environment and/or the like). An example of an implementation of a machine learning model is included below with respect to FIG. 4B.

Database 410 stores data that is transmitted to, received from, and/or updated by perception system 402, planning system 404, localization system 406 and/or control system 408. In some examples, database 410 includes a storage component (e.g., a storage component that is the same as or similar to storage component 308 of FIG. 3) that stores data and/or software related to the operation and uses at least one system of autonomous vehicle compute 400. In some embodiments, database 410 stores data associated with 2D and/or 3D maps of at least one area. In some examples, database 410 stores data associated with 2D and/or 3D maps of a portion of a city, multiple portions of multiple cities, multiple cities, a county, a state, a State (e.g., a country), and/or the like). In such an example, a vehicle (e.g., a vehicle that is the same as or similar to vehicles 102 and/or vehicle 200) can drive along one or more drivable regions (e.g., single-lane roads, multi-lane roads, highways, back roads, off road trails, and/or the like) and cause at least one LiDAR sensor (e.g., a LiDAR sensor that is the same as or similar to LiDAR sensors 202b) to generate data associated with an image representing the objects included in a field of view of the at least one LiDAR sensor.

In some embodiments, database 410 can be implemented across a plurality of devices. In some examples, database 410 is included in a vehicle (e.g., a vehicle that is the same as or similar to vehicles 102 and/or vehicle 200), an autonomous vehicle system (e.g., an autonomous vehicle system that is the same as or similar to remote AV system 114, a fleet management system (e.g., a fleet management system that is the same as or similar to fleet management system 116 of FIG. 1, a V2I system (e.g., a V2I system that is the same as or similar to V2I system 118 of FIG. 1) and/or the like.

Referring now to FIG. 4B, illustrated is a diagram of an implementation of a machine learning model. More specifically, illustrated is a diagram of an implementation of a convolutional neural network (CNN) 420. For purposes of illustration, the following description of CNN 420 will be with respect to an implementation of CNN 420 by perception system 402. However, it will be understood that in some examples CNN 420 (e.g., one or more components of CNN 420) is implemented by other systems different from, or in addition to, perception system 402 such as planning system 404, localization system 406, control system 408, and/or the remote vehicle assistance system 505. While CNN 420 includes certain features as described herein, these features are provided for the purpose of illustration and are not intended to limit the present disclosure.

CNN 420 includes a plurality of convolution layers including first convolution layer 422, second convolution layer 424, and convolution layer 426. In some embodiments, CNN 420 includes sub-sampling layer 428 (sometimes referred to as a pooling layer). In some embodiments, sub-sampling layer 428 and/or other subsampling layers have a dimension (i.e., an amount of nodes) that is less than a dimension of an upstream system. By virtue of sub-sampling layer 428 having a dimension that is less than a dimension of an upstream layer, CNN 420 consolidates the amount of data associated with the initial input and/or the output of an upstream layer to thereby decrease the amount of computations necessary for CNN 420 to perform downstream convolution operations. Additionally, or alternatively, by virtue of sub-sampling layer 428 being associated with (e.g., configured to perform) at least one subsampling function (as described below with respect to FIGS. 4C and 4D), CNN 420 consolidates the amount of data associated with the initial input.

Perception system 402 performs convolution operations based on perception system 402 providing respective inputs and/or outputs associated with each of first convolution layer 422, second convolution layer 424, and convolution layer 426 to generate respective outputs. In some examples, perception system 402 implements CNN 420 based on perception system 402 providing data as input to first convolution layer 422, second convolution layer 424, and convolution layer 426. In such an example, perception system 402 provides the data as input to first convolution layer 422, second convolution layer 424, and convolution layer 426 based on perception system 402 receiving data from one or more different systems (e.g., one or more systems of a vehicle that is the same as or similar to vehicle 102), a remote AV system that is the same as or similar to remote AV system 114, a fleet management system that is the same as or similar to fleet management system 116, a V2I system that is the same as or similar to V2I system 118, and/or the like).

In some embodiments, perception system 402 provides data associated with an input (referred to as an initial input) to first convolution layer 422 and perception system 402 generates data associated with an output using first convolution layer 422. In some embodiments, perception system 402 provides an output generated by a convolution layer as input to a different convolution layer. For example, perception system 402 provides the output of first convolution layer 422 as input to sub-sampling layer 428, second convolution layer 424, and/or convolution layer 426. In such an example, first convolution layer 422 is referred to as an upstream layer and sub-sampling layer 428, second convolution layer 424, and/or convolution layer 426 are referred to as downstream layers. Similarly, in some embodiments perception system 402 provides the output of sub-sampling layer 428 to second convolution layer 424 and/or convolution layer 426 and, in this example, sub-sampling layer 428 would be referred to as an upstream layer and second convolution layer 424 and/or convolution layer 426 would be referred to as downstream layers.

In some embodiments, perception system 402 processes the data associated with the input provided to CNN 420 before perception system 402 provides the input to CNN 420. For example, perception system 402 processes the data associated with the input provided to CNN 420 based on perception system 420 normalizing sensor data (e.g., image data, LiDAR data, radar data, and/or the like).

In some embodiments, CNN 420 generates an output based on perception system 420 performing convolution operations associated with each convolution layer. In some examples, CNN 420 generates an output based on perception system 420 performing convolution operations associated with each convolution layer and an initial input. In some embodiments, perception system 402 generates the output and provides the output as fully connected layer 430. In some examples, perception system 402 provides the output of convolution layer 426 as fully connected layer 430, where fully connected layer 420 includes data associated with a plurality of feature values referred to as F1, F2 . . . FN. In this example, the output of convolution layer 426 includes data associated with a plurality of output feature values that represent a prediction.

In some embodiments, perception system 402 identifies a prediction from among a plurality of predictions based on perception system 402 identifying a feature value that is associated with the highest likelihood of being the correct prediction from among the plurality of predictions. For example, where fully connected layer 430 includes feature values F1, F2, . . . FN, and F1 is the greatest feature value, perception system 402 identifies the prediction associated with F1 as being the correct prediction from among the plurality of predictions. In some embodiments, perception system 402 trains CNN 420 to generate the prediction. In some examples, perception system 402 trains CNN 420 to generate the prediction based on perception system 402 providing training data associated with the prediction to CNN 420.

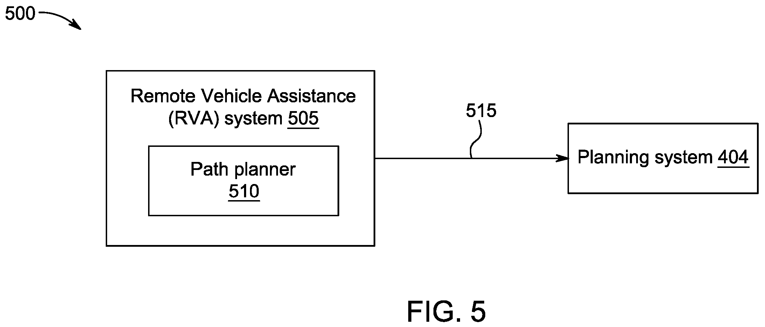

Referring now to FIG. 5, illustrated is a diagram of an implementation 500 of a process for path selection via remote vehicle assistance. In some embodiments, implementation 500 includes remote vehicle assistance system 505, vehicles 102a-102n and/or vehicles 200, objects 104a-104n, routes 106a-106n, area 108, vehicle-to-infrastructure (V21) device 110, network 112, remote autonomous vehicle (AV) system 114, fleet management system 116, and/or V2I system 118. In some embodiments, remote vehicle assistance system 505 includes, forms a part of, is coupled to, and/or uses vehicles 102a-102n and/or vehicles 200, objects 104a-104n, routes 106a-106n, area 108, vehicle-to-infrastructure (V21) device 110, network 112, remote autonomous vehicle (AV) system 114, fleet management system 116, and/or V21 system 118.

As shown in FIG. 5, the implementation 500 includes an remote vehicle assistance system 505. The remote vehicle assistance system 505 includes a path planner 510 configured to acquire and process sensor data from one or more sensors 202 affixed to the vehicle. In some embodiments, the sensor data is used to determine and provide candidate paths or trajectories for the vehicle to navigate from a current position, such as a position at which it is stuck and has requested remote vehicle assistance, to a goal location that the vehicle is attempting to navigate toward. Based on the received sensor data, the path planner 510 determines hypothetical or candidate paths or trajectories 515, which are provided to an operator of the RVA system 505 via a human machine interface (HMI) of the RVA system 505. The operator can manipulate, e.g., alter, re-draw, add, or delete, aspects of one or more of the candidate paths generated by the path planner 510. The operator can adjust or alter a candidate path so that it is most likely to be accepted by the vehicle planning system 404 to provide continued autonomous navigation from the stuck location. The operator can then select a path 515 to be provided to the vehicle for navigation through or away from the location at which it is stuck (or has otherwise requested remote vehicle assistance). The operator can determine or otherwise select a path based on sensor data, as well as costs and constraints that can be associated with one or more of the candidate paths provided to the operator via the HMI.

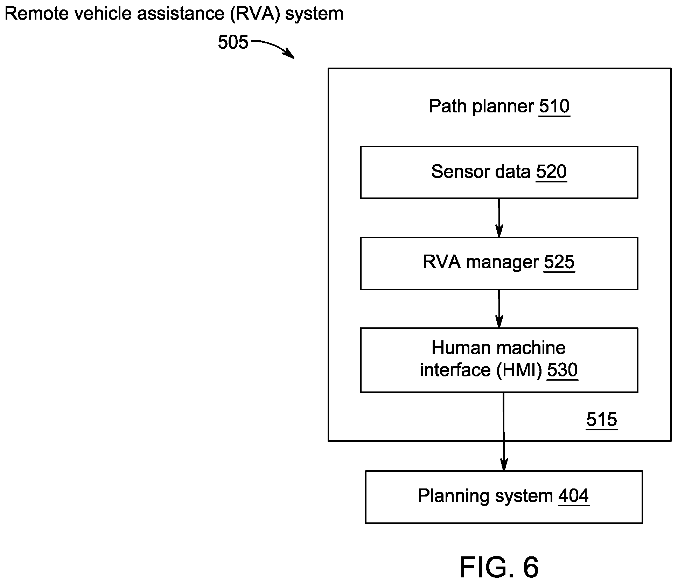

Referring now to FIG. 6, illustrated is a diagram of a detailed implementation of the RVA system 505 of FIG. 5. As shown in FIG. 6, the RVA system 505 includes an path planner 510. The path planner 510 receives sensor data 520 from any one of sensors 202. The sensor data 520 is processed by a RVA manager 525 to generate candidate paths in response to a request for remote vehicle assistance received from the autonomous vehicle. The RVA manager 525 can be configured to generate candidate paths that are optimized to reduce the probability of rejection when received by the vehicle planning system 404. The RVA manager 525 can optimize the candidate paths in regard to costs and constraints associated with each path. The RVA manager 525 also provides the paths, as well as the costs and constraints associated with each path for visualization in the HMI 530. In this way, an operator can observe the sensor data and the generated candidate paths to select one of the candidate path to provide to the vehicle planning system 404 as selected path 515. The operator can also adjust or modify a candidate path and provide the adjusted or modified path as the selected path 515 to the vehicle planning system 404.

The path planner 510 can be subscribed to or otherwise receive data, such as status updates or RVA requests, from other systems included in the autonomous vehicle computing system 400. In addition, the path planner 510 can read static configurations at startup and provide them as data feeds to the HMI 530. The path planner 510 can create visualizations of paths that include costs and constraints associated with each path. The visualizations can be provided via the HMI 530. The path planner 510 can also determine optimized, alternate paths and can provide the alternate paths via the HMI 530. In some embodiments, the paths can be modified by an operator via the HMI 530. For example, upon presentation of a visualization including a path, an operator can adjust a path with respect to a constraint, such as an object or pedestrian, so that the adjusted path avoids the constraint. One or more segments of a path can be adjusted via the HMI 530 in regard to a constraint or a cost associated with a path. The RVA operator can interact with the HMI 530 to select a path 515. The selected path 515 can be provided to the vehicle planning system 404 and the vehicle can be operated to navigate to the vehicle in relation to the selected path 515 so as to avoid objects 104.

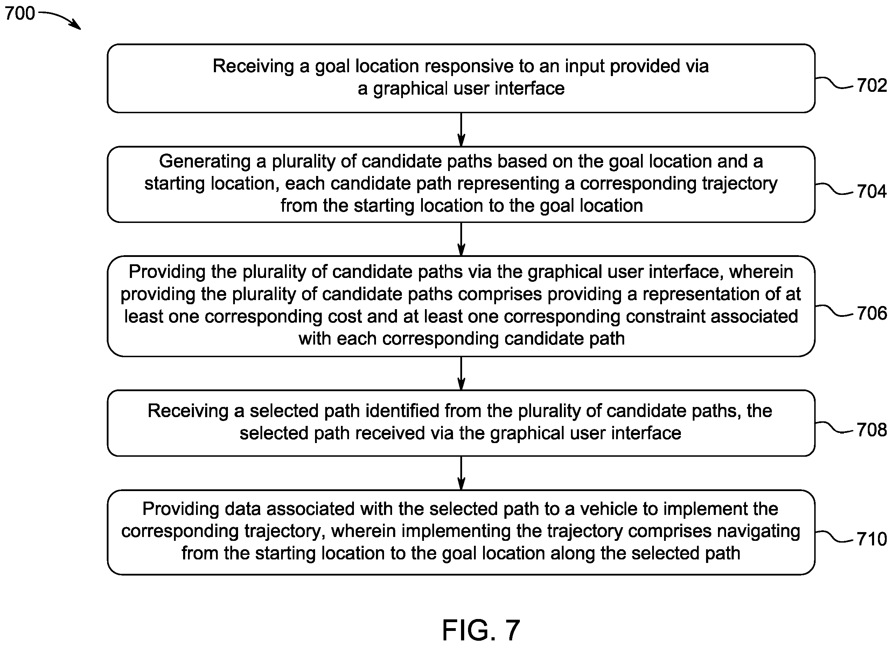

Referring now to FIG. 7, illustrated is a flowchart of a process 700 for path selection using the RVA system 505 described herein. In some embodiments, one or more of the steps described with respect to process 700 are performed (e.g., completely, partially, and/or the like) by the RVA system 505. Additionally, or alternatively, in some embodiments one or more steps described with respect to process 700 are performed (e.g., completely, partially, and/or the like) by another device or group of devices separate from or including the RVA system 505 such as perception system 402, planning system 404, localization system 406, and/or control system 408.

At 702, the process includes receiving a goal location responsive to an input provided via a graphical user interface. The input is provided via an HMI of an RVA system, such as HMI 530, in response to a received request for RVA. The request for RVA can be provided by the vehicle at a starting location (e.g., a location at which the vehicle is requesting RVA).

At 704, the process incudes generating a plurality of candidate paths based on the goal location and a starting location. Each candidate path can represent a corresponding trajectory from the starting location to the goal location. The starting location can be a location at which the vehicle is stuck and/or requesting RVA. Generating the plurality of candidate paths can include generating the plurality of candidate paths based on one or more visualization modes. Each visualization mode can provide a representation of the trajectory from the starting location to the goal location. Generating the plurality of candidate paths can also include generating the plurality of candidate paths based on a plurality of previously generated candidate paths within a predetermined radius of the starting location and/or the goal location.

In some embodiments, the one or more visualization modes can include a lane graph view, an intersection view, or a wireframe view. Generating the plurality of candidate paths based on the plurality of previously generated candidate within the predetermined radius of the starting location and/or the goal location can also include generating the plurality of candidate paths based on at least one of blockages associated with the plurality of previously generated candidate paths, waypoints associated with the plurality of previously generated candidate paths, trajectory acceptance rates associated with the plurality of previously generated candidate paths, or an environment associated with the plurality of previously generated candidate paths.

At 706, the process includes providing the plurality of candidate paths via the graphical user interface. Providing the plurality of candidate paths includes providing a representation of at least one corresponding cost and at least one corresponding constraint associated with each corresponding candidate path. In some embodiments, the at least one constraint can include at least one of a buffer between a front of the vehicle and an object or the at least one constraint can include a buffer between a side of the vehicle and an object. The constraint represents a limitation or a safety factor configured to ensure the candidate path can be a safe and navigable path that the vehicle planning system is likely to accept and implement to navigate the vehicle from the starting location. In some embodiments, the at least one cost can include a lane change cost or a curvature cost. The cost represents an event, object, or environmental configuration that can cause the candidate path to be rejected by the vehicle planning system if not accounted for and navigated so as to avoid or reduce the cost.

At 708, the process includes receiving a selected path identified from the plurality of candidate paths. The selected path can be received via the graphical user interface. In some embodiments, the selected path can be adjusted such that a modification can be provided to the selected path via the graphical user interface or HMI 530. The modification can adjust part (e.g., a segment or a way point) of the selected path. Each candidate path (or each selected path) provided in the graphical user interface can include a plurality of editable waypoints located along the trajectory between the starting location and the goal location.

At 710, the process includes providing data associated with the selected path to a vehicle to implement the corresponding trajectory, wherein implementing the trajectory comprises navigating from the starting location to the goal location along the selected path. In some embodiments, the graphical user interface provides a visual representation of features present in an environment in which the vehicle is operating. The visual representation can include features located within a predetermined distance from each candidate path. For example, in some embodiments, the graphical user interface can include video data of the environment in which the vehicle is located.

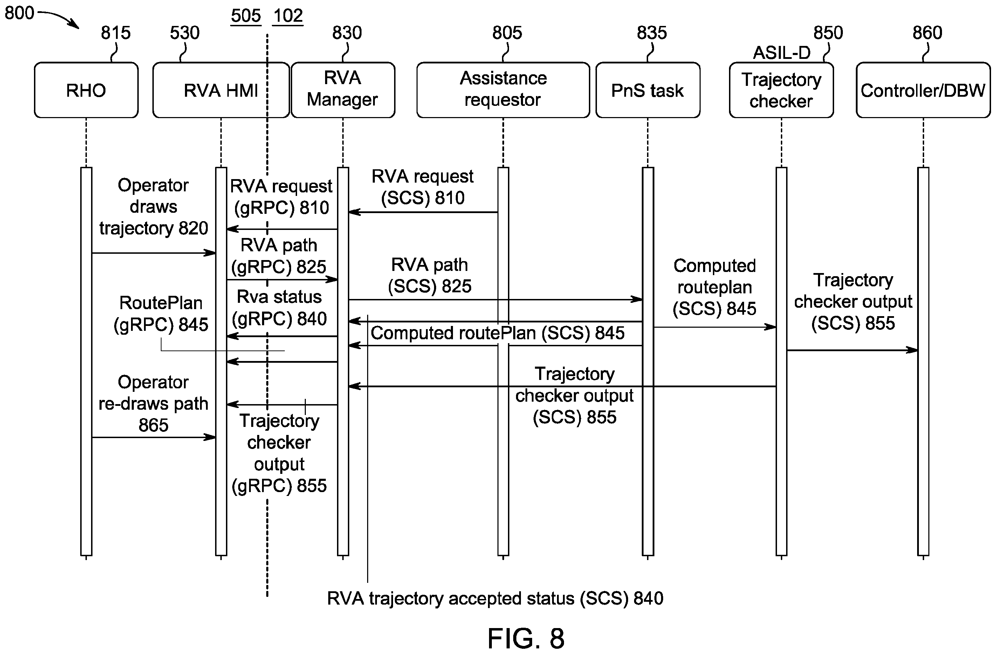

Referring now to FIG. 8, a dataflow 800 can be executed between the RVA system 505 and the vehicle 102 to perform the method described in relation to FIG. 7. As shown in FIG. 8, the RVA process begins when the Assistance Requestor 805 of vehicle 102 generates a RVA request 810. The RVA request 810 can be passed to a Remote Human Operator (RHO) 815 operating the RVA system 505. The RHO 815 can draw a trajectory 820 using the RVA HMI 530. A RVA path 825 can be generated by the HMI 530 and the path 825 can be provided to a Propose and Select Task Module (e.g., PnS Task 835). The Propose And Select Task Module 835 is part of the autonomous vehicle compute 400 (sometimes referred to as the "AV stack") and interfaces with the planning system 404 and the control system 408 of the autonomous vehicle compute 400. The PnS Task 835 can perform operations for determining a planned route for the vehicle 102 and executing the determined route autonomously.

The RHO 815 can become aware of a rejected path in response to a RVA status message, a route plan 840, or trajectory checker output 845. The PnS Task 835 can accept or reject the path 825 and can assign a state to any path 825. For example, the PnS Task 835 can determine a path 825 is acceptable (e.g., a path that can be accepted by the vehicle planning system 404 and will not be rejected as a navigable path). The PnS Task 835 can generate an acceptance status 840 associated with the path 825. The acceptance status 840 can be provided to the RVA HMI 530. Since the path 825 was determined to have an acceptance status 840, the PnS Task 835 can compute a route plan 845 based on the accepted path 825. The route plan 845 can be also be provided to the RVA HMI 530.

The PnS Task 835 can determine and provide a route plan 845 corresponding to the accepted path 825 to a Trajectory Checker 850. The Trajectory Checker 850 assesses constraints and costs associated with the route plan 845 and accepts or rejects the route plan 845. The Trajectory Checker 850 utilizes a risk classification scheme, such as ASIL-D, to assess the route plan 845. Automotive Safety Integrity Level (ASIL) is a risk classification scheme defined by the ISO 26262 - Functional Safety for Road Vehicles standard. This standard is an adaptation of the Safety Integrity Level (SIL) used in IEC 61508 for the automotive industry. This classification helps define safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements. The Trajectory Checker 850 can evaluate the route plan 845 with regard to the ASIL-D requirements and can generate an output 855. The route plan 845 can also be provided to the RHO 815 via the HMI 530.

The Trajectory Checker 845 can provide the output 855 to a Controller 860. The controller 860 can be configured to interface with a drive-by-wire actuation system to control one or more actuators in the vehicle 102 associated with acceleration, braking, and/or steering of the vehicle 102.

In some embodiments, RHO 815 can provide inputs 865 to redraw the path 825. For example, if the PnS Task 835 generates an Unacceptable status 840 for a particular path 825, responsive to receiving that Unacceptable status 840, the RHO 815 can use the HMI 530 to provide inputs 865 modifying or altering the path 825, such as when one or more costs or constraints provided in the path 825 are likely to cause the path 825 to be rejected by the PnS Task 835 and/or the Trajectory Checker 850.

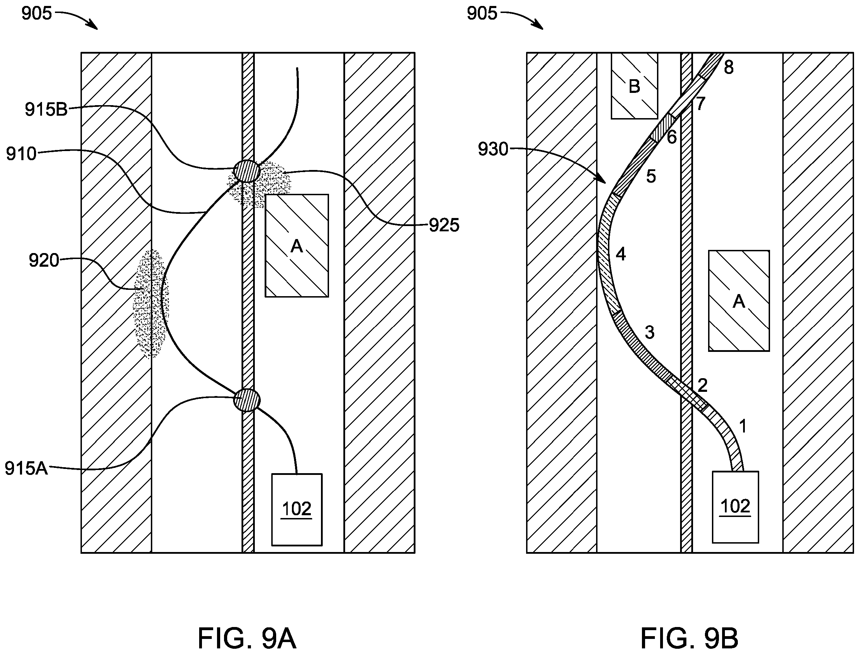

FIGS. 9A and 9B illustrate embodiments of user interfaces of the remote vehicle assistance system described herein. As shown in FIG. 9A, the user interface 905 can a lane graph view providing include a visualization of the vehicle 102 with respect to a second vehicle A. Responsive to the request for RVA, the RVA system 505 can determine a path 910 to navigate around vehicle A. The path 910 can include editable waypoints 915A and 915B. The user interface 905 can also include visual representations of costs and constraints. For example, a side width constraint or side buffer constraint 920 can be visually represented in relation to the proximity of the path 910 to a boundary of the lane that is opposite the intended travel lane and is the lane in which the proposed path 910 is planned. Additionally, as further shown in FIG. 9A, the user interface 905 can include a visual representation of a cost 925 that may be present in regard to waypoint 915B. For example, the cost 925 can correspond to a lane change cost associated with the proximity of the path 925 to vehicle A as vehicle 102 navigates to pass vehicle A and return to the original travel lane. In some embodiments, the visual representations can be provided using color, point clouds, shading, patterns, animations, icons, indicators, or the like.

As shown in FIG. 9B, the user interface 905 showing the lane graph view can include a path 930 including a plurality of segments, shown as segments 1-8. The segments can be color coded (or include a similar graphical affordance or visual representation) to indicate the viability of the segment as a navigable path segment. For example, segment 4 can be identified with a side buffer constraint using a first color as the path 930 routes vehicle 102 around vehicle A. Additionally, segment 6 can provided in a second color to highlight a possible lane change cost associate with the path 930 in relation to vehicle B. Each of the segments 108 can be independently adjusted or redrawn to provide a path 930 that is most likely to be accepted by the vehicle planning system 404.

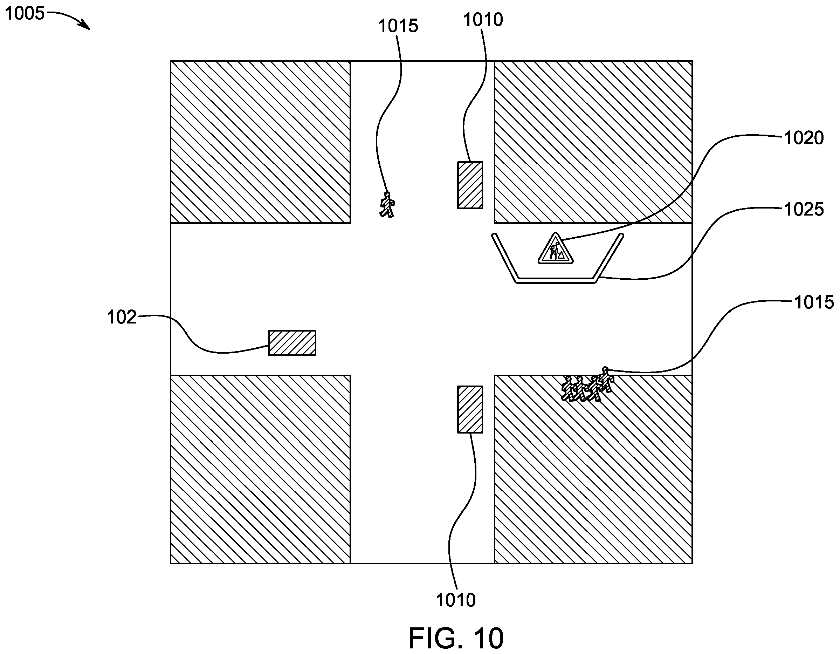

FIG. 10 illustrates an embodiment of a user interface 1005 of the RVA system 505 described herein showing one or more detected objects. For example, the user interface 1005 can be provided as an intersection view depicting an intersection that the vehicle 102 is approaching. The intersection view can be provided with visual representations of other vehicles 1010, as well as pedestrians 1015. The intersection view can also include a visual representation of a hazard 1020. A constraint 1025 can be generated with respect to the hazard 1020 so that route planning inputs can be provided to avoid the hazard 1020.

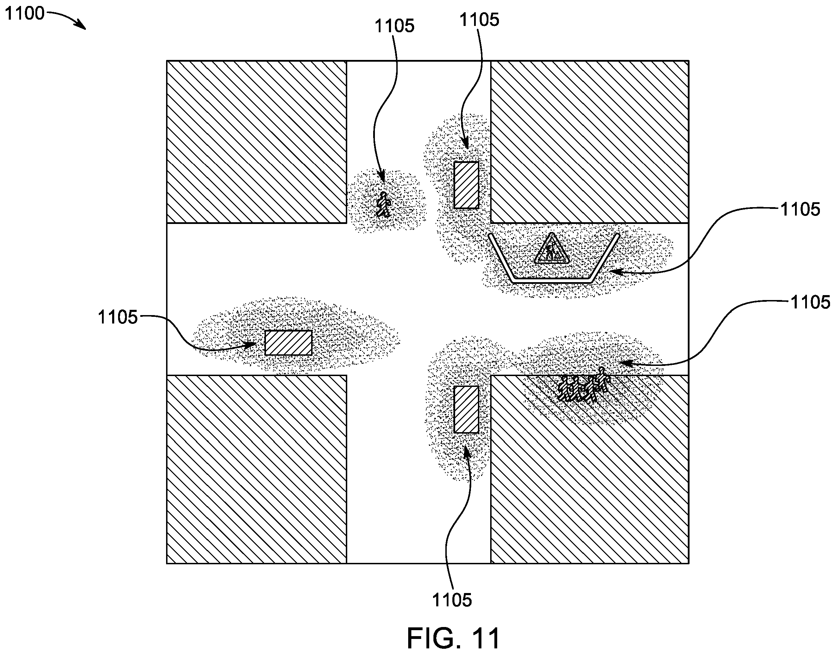

FIG. 11 illustrates another embodiment of a user interface 1100 of the RVA system 505 described herein showing one or more costs associated with the detected objects of FIG. 10. As shown in FIG. 11, the user interface 1100 includes costs 1105 visually depicted with shading or point clouds for each of the detected objects (e.g., the vehicles 1010, pedestrians 1015, and hazard 1020). The size of the shading or point clouds can be configured to allow the RHO 815 to draw a path with sufficient buffer so as to enable the vehicle to safely navigate with respect to the detected objects the first time and without needing to recalculate the path with respect to any one of the detected objects.

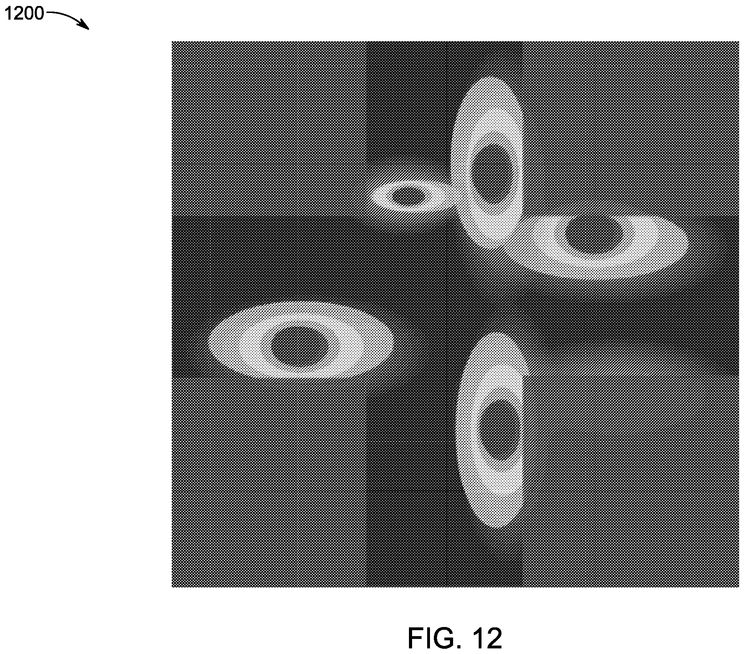

FIG. 12 illustrates another embodiment of a user interface 1200 of the RVA system 505 described herein showing another embodiment of one or more costs associated with the detected objects of FIG. 10. As shown in FIG. 12, a heat map can be used with various color patterns used to depict the detected objects and the costs associated with the detected objects. Each color in the colored patterns can be associated with a level of risk of a path (and thus the vehicle 102) contacting the detected object. Thus, by providing inputs to avoid any of the colored patterns, the RHO 815 can provide a path that is most likely to be accepted by the vehicle planning system 404.

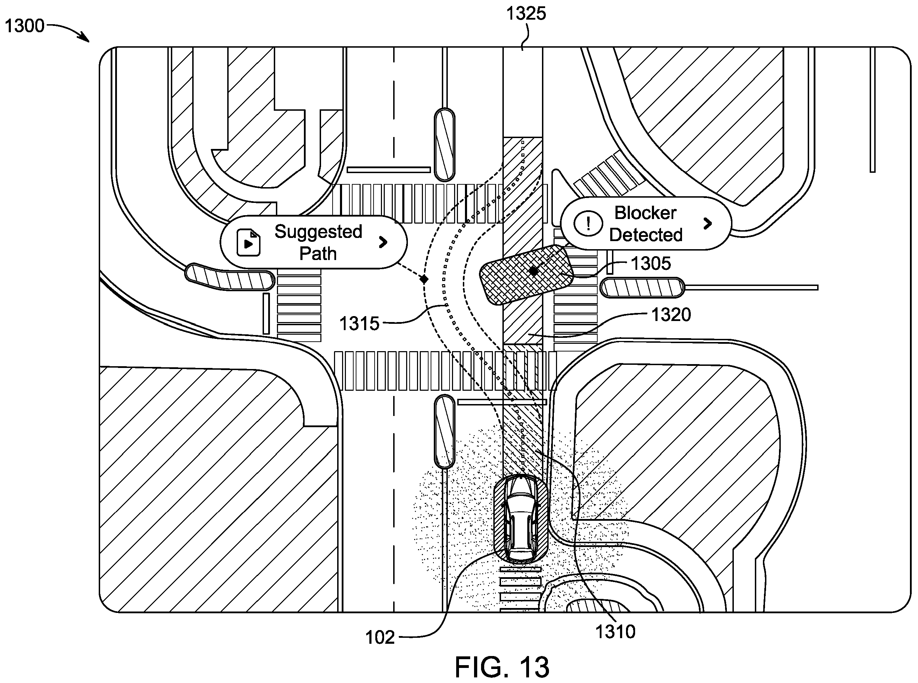

FIG. 13 illustrates another embodiment of a user interface 1300 of the RVA system 505 showing a path determined and provided to avoid a detected object as described herein. As shown in FIG. 13, the user interface 1300 includes an intersection view of an intersection vehicle 102 is approaching. Due to an object (e.g., a vehicle 1305) obstructing its path 1310, the RVA system 505 can determine a suggested path 1315 to aid vehicle 102 to navigate around vehicle 1305. The path 1315 can replace the original segment 1320 of the path 1310 and allow vehicle 102 to continue navigating to segment 1325. In some embodiments, the suggested path 1315 can be determined by the RVA system 505 or can be drawn by the RHO 815.

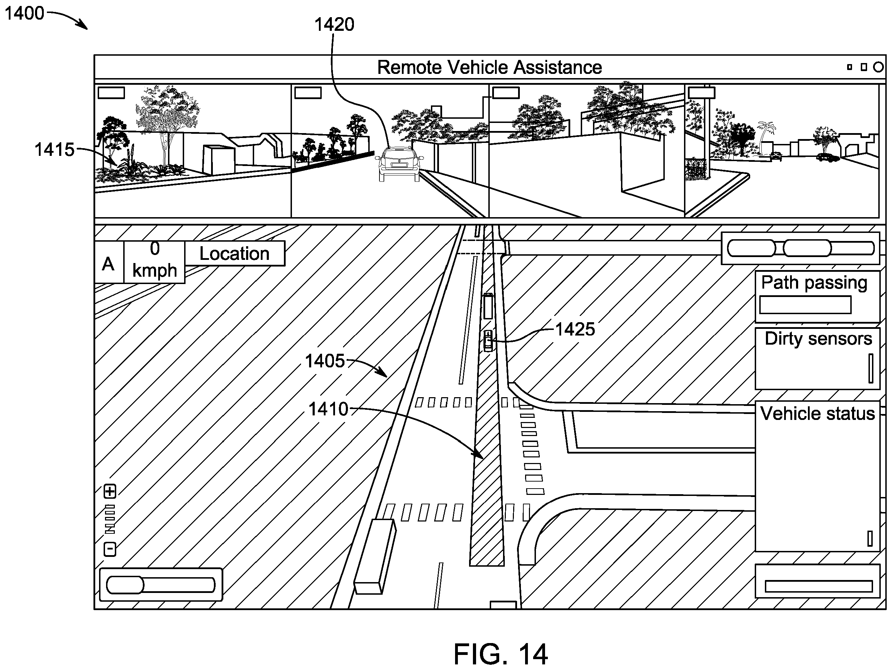

FIG. 14 illustrates another embodiment of a user interface 1400 of the RVA system 505 showing sensor data and a vehicle path as described herein. For example, as shown in FIG. 14, the user interface 1400 can include an intersection view 1405 and the path 1410 therein. The user interface 1400 can also include sensor data 1415, such as live streamed video image data of the environment surrounding the vehicle. For example, the sensor data can capture a vehicle 1420 positioned in front of the vehicle using the RVA system 505 and response to sending an RVA request, an RHO 815 can view the sensor data associated with the vehicle 1420 and a corresponding visualization 1425 in the user interface 1400.

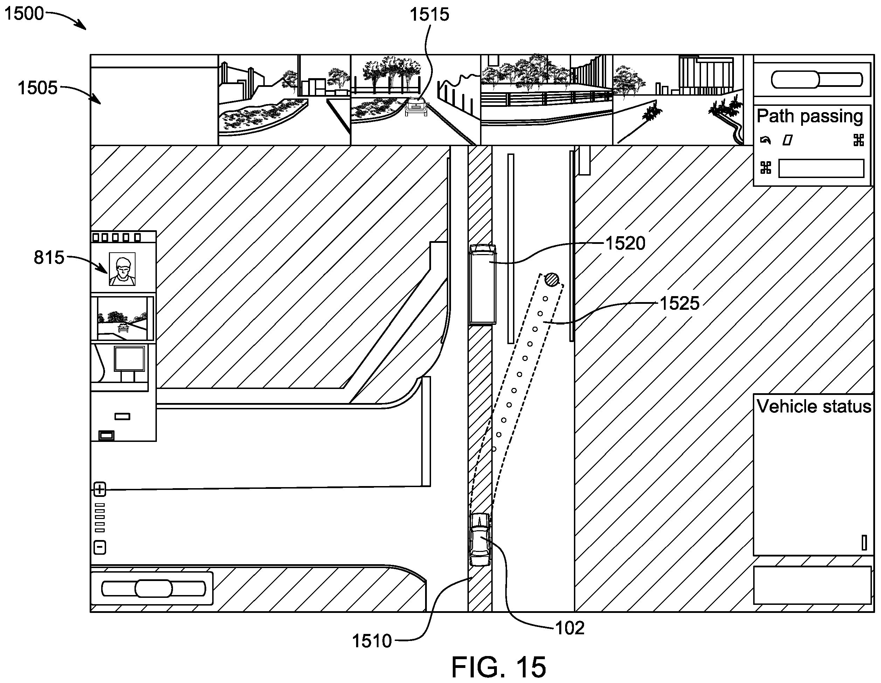

FIG. 15 illustrates another embodiment of a user interface 1500 of the RVA system showing sensor data, RVA operator data, and path selection as described herein. As shown in FIG. 15, the user interface 1500 can include sensor data 1505, such as video data of the environment surrounding the vehicle 102. The user interface 1500 can include a path 1510 determined by the RVA system 505. As shown in FIG. 15, the sensor data can include a vehicle 1515 in front of vehicle 102. Responsive to a RVA request, the RVA system 505 can account for vehicle 1515 and generate a corresponding visual representation 1520 within the path 1510. A RHO 815 can review a generated path 1525 or can draw the path 1525 to aid the vehicle 102 to navigate around vehicle 1515.

The techniques for remote vehicle assistance described herein can provide technical solutions, which can provide technical advantages over existing remote vehicle assistance systems. The advantages can include, but are not limited to, increased response times and path accuracy for remotely assisted navigation path provision in autonomous vehicle operating environments. The remote vehicle assistance systems described herein can also reduce the rate at which a vehicle planning system may reject a candidate path by improving the accuracy of a selected path, thereby allowing the vehicle to return to normal navigation safely and more quickly. As a result, more accurate navigation trajectory or path data can be provided to the planning system of the vehicle and the vehicle can be operate more safely in a larger variety of operating conditions.

In the foregoing description, aspects and embodiments of the present disclosure have been described with reference to numerous specific details that can vary from implementation to implementation. Accordingly, the description and drawings are to be regarded in an illustrative rather than a restrictive sense.. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A method, comprising:
receiving (702), with at least one processor, a goal location responsive to an input provided via a graphical user interface (905, 1005, 1100, 1200, 1300, 1400, 1500), wherein the input is provided via the graphical user interface responsive to a request (810) for remote vehicle assistance provided by the vehicle at a starting location;
generating (704), with the at least one processor, a plurality of candidate paths based on the goal location and a starting location, each candidate path representing a corresponding trajectory from the starting location to the goal location;
providing (706), with the at least one processor, the plurality of candidate paths via the graphical user interface, wherein providing the plurality of candidate paths comprises providing a representation of at least one corresponding cost and at least one corresponding constraint associated with each corresponding candidate path, wherein the at least one corresponding constraint represents a safety factor and the cost comprises an event, object, or environmental configuration that causes a corresponding candidate path to be rejected by a vehicle if not accounted for and navigated;
receiving (708), with the at least one processor, a selected path identified from the plurality of candidate paths, the selected path received via the graphical user interface; and
providing (710), with the at least one processor, data associated with the selected path to the vehicle to implement the corresponding trajectory, wherein implementing the trajectory comprises verifying, using a risk assessment scheme and based on the at least one constraint associated with the selected path and the at least one cost associated with the selected path, whether a route plan (845) corresponding to the selected path is acceptable and, in response to verifying that the route plan is acceptable, navigating from the starting location to the goal location along the selected path.

2. The method of claim 1, wherein generating the plurality of candidate paths comprises:
generating the plurality of candidate paths based on one or more visualization modes, each visualization mode providing a representation of the trajectory from the starting location to the goal location, or
generating the plurality of candidate paths based on a plurality of previously generated candidate paths within a predetermined radius of the starting location and/or the goal location.

3. The method of claim 2, wherein the one or more visualization modes include a lane graph view, a view of an intersection that the vehicle is approaching, or a wireframe view.

4. The method of claim 2, wherein generating the plurality of candidate paths based on the plurality of previously generated candidate within the predetermined radius of the starting location and/or the goal location further comprises generating the plurality of candidate paths based on at least one of
blockages associated with the plurality of previously generated candidate paths, waypoints associated with the plurality of previously generated candidate paths, trajectory acceptance rates associated with the plurality of previously generated candidate paths, or
an environment associated with the plurality of previously generated candidate paths.

5. The method of any one of the preceding claims, wherein the at least one cost and/or the at least one constraint associated with each corresponding candidate path is provided via the graphical user interface using a color, shading, or patterns.

6. The method of claim 5, wherein the at least one constraint can include at least one of a buffer between a front of the vehicle and an object or a buffer between a side of the vehicle and an object.

7. The method of claim 6, wherein the at least one cost can include a lane change cost or a curvature cost.

8. The method of any one of the preceding claims, wherein prior to providing data associated with the selected path, the at least one processor can receive a modification to the selected path via the graphical user interface.

9. The method of any one of the preceding claims, wherein the graphical user interface provides a visual representation of features present in an environment in which the vehicle is located, the visual representation including features located within a predetermined distance from each candidate path.

10. The method of any one of the preceding claims, wherein each candidate path provided in the graphical user interface includes a plurality of editable waypoints located along the trajectory and between the starting location and the goal location.

11. A system (505) comprising:
at least one processor, and
at least one non-transitory storage media storing instructions that, when executed by the at least one processor, cause the at least one processor to perform the method of any one of claims 1 to 10.

12. At least one non-transitory storage media storing instructions that, when executed by at least one processor, cause the at least one processor to perform the method of any one of claims 1 to 10.

## Patentansprüche

1. Verfahren, umfassend:
Empfangen (702), mit mindestens einem Prozessor, eines Zielortes als Reaktion auf eine Eingabe, die über eine grafische Benutzerschnittstelle (905, 1005, 1100, 1200, 1300, 1400, 1500) bereitgestellt wird, wobei die Eingabe über die grafische Benutzerschnittstelle als Reaktion auf eine Anforderung (810) für entfernte Fahrzeugunterstützung bereitgestellt wird, die durch das Fahrzeug an einem Startort bereitgestellt wird;
Erzeugen (704), mit dem mindestens einen Prozessor, einer Mehrzahl von Kandidatenpfaden basierend auf dem Zielort und einem Startort, wobei jeder Kandidatenpfad eine entsprechende Trajektorie vom Startort zum Zielort repräsentiert;
Bereitstellen (706), mit dem mindestens einen Prozessor, der Mehrzahl von Kandidatenpfaden über die grafische Benutzerschnittstelle, wobei das Bereitstellen der Mehrzahl von Kandidatenpfaden das Bereitstellen einer Repräsentation mindestens eines entsprechenden Aufwandsfaktors und mindestens einer entsprechenden Einschränkung, die jedem entsprechenden Kandidatenpfad zugeordnet ist, umfasst, wobei die mindestens eine entsprechende Einschränkung einen Sicherheitsfaktor repräsentiert und der Aufwandsfaktor ein Ereignis, ein Objekt oder eine Umgebungskonfiguration umfasst, wodurch bewirkt wird, dass ein entsprechender Kandidatenpfad von einem Fahrzeug abgelehnt wird, wenn er nicht berücksichtigt und navigiert wird;
Empfangen (708), mit dem mindestens einen Prozessor, eines ausgewählten Pfades, der aus der Mehrzahl von Kandidatenpfaden identifiziert wird, wobei der ausgewählte Pfad über die grafische Benutzerschnittstelle empfangen wird; und
Bereitstellen (710), mit dem mindestens einen Prozessor, von dem ausgewählten Pfad zugeordneten Daten an das Fahrzeug, um die entsprechende Trajektorie zu implementieren, wobei das Implementieren der Trajektorie das Verifizieren, unter Verwendung eines Risikobewertungsschemas und basierend auf der mindestens einen dem ausgewählten Pfad zugeordneten Einschränkung und dem mindestens einen dem ausgewählten Pfad zugeordneten Aufwandsfaktor, ob ein dem ausgewählten Pfad entsprechender Routenplan (845) akzeptabel ist, und, als Reaktion auf das Verifizieren, dass der Routenplan akzeptabel ist, das Navigieren vom Startort zum Zielort entlang des ausgewählten Pfads umfasst.

2. Verfahren nach Anspruch 1, wobei das Erzeugen der Mehrzahl von Kandidatenpfaden Folgendes umfasst:
Erzeugen der Mehrzahl von Kandidatenpfaden basierend auf einem oder mehreren Visualisierungsmodi, wobei jeder Visualisierungsmodus eine Repräsentation der Trajektorie vom Startort zum Zielort bereitstellt, oder
Erzeugen der Mehrzahl von Kandidatenpfaden basierend auf einer Mehrzahl zuvor erzeugter Kandidatenpfade innerhalb eines vorbestimmten Radius um den Startort und/oder den Zielort.

3. Verfahren nach Anspruch 2, wobei der eine oder die mehreren Visualisierungsmodi eine Fahrspurgraphenansicht, eine Ansicht einer Kreuzung, der sich das Fahrzeug nähert, oder eine Drahtmodellansicht beinhalten.

4. Verfahren nach Anspruch 2, wobei das Erzeugen der Mehrzahl von Kandidatenpfaden basierend auf der Mehrzahl von zuvor erzeugten Kandidaten innerhalb eines vorbestimmten Radius um den Startort und/oder den Zielort ferner das Erzeugen der Mehrzahl von Kandidatenpfaden basierend auf mindestens einem von
Blockaden, die der Mehrzahl von zuvor erzeugten Kandidatenpfaden zugeordnet sind,
Wegpunkten, die der Mehrzahl von zuvor erzeugten Kandidatenpfaden zugeordnet sind,
Trajektorienakzeptanzraten, die der Mehrzahl von zuvor erzeugten Kandidatenpfaden zugeordnet sind, oder
einer Umgebung, die der Mehrzahl von zuvor erzeugten Kandidatenpfaden zugeordnet ist, umfasst.

5. Verfahren nach einem der vorhergehenden Ansprüche, wobei der mindestens eine Aufwandsfaktor und/oder die mindestens eine Einschränkung, die jedem entsprechenden Kandidatenpfad zugeordnet ist, über die grafische Benutzerschnittstelle unter Verwendung einer Farbe, einer Schattierung oder von Mustern bereitgestellt werden.

6. Verfahren nach Anspruch 5, wobei die mindestens eine Einschränkung mindestens einen Puffer zwischen einer Vorderseite des Fahrzeugs und einem Objekt oder einen Puffer zwischen einer Seite des Fahrzeugs und einem Objekt beinhalten kann.

7. Verfahren nach Anspruch 6, wobei der mindestens eine Aufwandsfaktor einen Fahrspurwechselaufwand oder einen Krümmungsaufwand beinhalten kann.

8. Verfahren nach einem der vorhergehenden Ansprüche, wobei der mindestens eine Prozessor vor dem Bereitstellen von dem ausgewählten Pfad zugeordneten Daten eine Modifikation des ausgewählten Pfads über die grafische Benutzerschnittstelle empfangen kann.

9. Verfahren nach einem der vorhergehenden Ansprüche, wobei die grafische Benutzerschnittstelle eine visuelle Darstellung von Merkmalen bereitstellt, die in einer Umgebung vorhanden sind, in der sich das Fahrzeug befindet, wobei die visuelle Darstellung Merkmale beinhaltet, die sich innerhalb einer vorbestimmten Entfernung von jedem Kandidatenpfad befinden.

10. Verfahren nach einem der vorhergehenden Ansprüche, wobei jeder Kandidatenpfad, der in der grafischen Benutzerschnittstelle bereitgestellt wird, eine Mehrzahl von editierbaren Wegpunkten beinhaltet, die sich entlang der Trajektorie und zwischen dem Startort und dem Zielort befinden.

11. System (505), umfassend:
mindestens einen Prozessor, und
mindestens ein nichttransitorisches Speichermedium, das Anweisungen speichert, die, wenn sie durch den mindestens einen Prozessor ausgeführt werden, den mindestens einen Prozessor veranlassen, das Verfahren nach einem der Ansprüche 1 bis 10 durchzuführen.

12. Mindestens ein nichttransitorisches Speichermedium, das Anweisungen speichert, die, wenn sie durch mindestens einen Prozessor ausgeführt werden, den mindestens einen Prozessor veranlassen, das Verfahren nach einem der Ansprüche 1 bis 10 durchzuführen.

## Revendications

1. Procédé, comprenant les étapes consistant à :
recevoir (702), avec au moins un processeur, un emplacement d'objectif en réponse à une entrée fournie via une interface utilisateur graphique (905, 1005, 1100, 1200, 1300, 1400, 1500), l'entrée étant fournie via l'interface utilisateur graphique en réponse à une demande (810) d'assistance au véhicule à distance envoyée par le véhicule à un emplacement de départ ;
générer (704), avec l'au moins un processeur, une pluralité de chemins candidats sur la base de l'emplacement d'objectif et d'un emplacement de départ, chaque chemin candidat représentant une trajectoire correspondante allant de l'emplacement de départ à l'emplacement d'objectif ;
fournir (706), avec l'au moins un processeur, la pluralité de chemins candidats via l'interface utilisateur graphique, la fourniture de la pluralité de chemins candidats comprenant la fourniture d'une représentation d'au moins un coût correspondant et d'au moins une contrainte correspondante associés à chaque chemin candidat correspondant, l'au moins une contrainte correspondante représentant un facteur de sécurité et le coût comprenant un événement, un objet ou une configuration environnementale qui provoque le rejet par un véhicule d'un chemin candidat correspondant s'il n'est pas pris en compte et s'il n'y a pas eu navigation dessus ;
recevoir (708), avec l'au moins un processeur, un chemin sélectionné identifié parmi la pluralité de chemins candidats, le chemin sélectionné étant reçu via l'interface utilisateur graphique ; et
fournir (710) au véhicule, avec l'au moins un processeur, des données associées au chemin sélectionnée pour mettre en œuvre la trajectoire correspondante, la mise en œuvre de la trajectoire comprenant la vérification, à l'aide d'une méthode d'évaluation de risque et sur la base de l'au moins une contrainte associée au chemin sélectionné et de l'au moins un coût associé au chemin sélectionné, du fait qu'un plan de route (845) correspondant au chemin sélectionné est acceptable et, en réponse à la vérification du fait que le plan de route est acceptable, naviguer de l'emplacement de départ à l'emplacement d'objectif le long du chemin sélectionné.

2. Procédé selon la revendication 1, dans lequel la génération de la pluralité de chemins candidats consiste à :
générer la pluralité de chemins candidats sur la base d'un ou plusieurs modes de visualisation, chaque mode de visualisation fournissant une représentation de la trajectoire allant de l'emplacement de départ à l'emplacement d'objectif, ou
générer la pluralité de chemins candidats sur la base d'une pluralité de chemins candidats précédemment générés dans un rayon prédéterminé de l'emplacement de départ et/ou de l'emplacement d'objectif.

3. Procédé selon la revendication 2, dans lequel les un ou plusieurs modes de visualisation comprennent une vue graphique de voie, une vue d'une intersection de laquelle le véhicule s'approche, ou une vue filaire.

4. Procédé selon la revendication 2, dans lequel la génération de la pluralité de chemins candidats sur la base de la pluralité de candidats précédemment générés dans le rayon prédéterminé de l'emplacement de départ et/ou de l'emplacement de départ et/ou de l'emplacement d'objectif comprend en outre la génération de la pluralité de chemins candidats sur la base d'au moins un élément parmi
des blocages associés à la pluralité de chemins candidats générés précédemment,
des points de cheminement associés à la pluralité de chemins candidats générés précédemment,
des taux d'acceptation de trajectoire associés à la pluralité de chemins candidats générés précédemment, ou un environnement associé à la pluralité de chemins candidats générés précédemment.

5. Procédé selon l'une quelconque des revendications précédentes, dans lequel l'au moins un coût et/ou l'au moins une contrainte associés à chaque chemin candidat correspondant sont fournis via l'interface utilisateur graphique au moyen d'une couleur, d'un ombrage ou de motifs.

6. Procédé selon la revendication 5, dans lequel l'au moins une contrainte peut comprendre au moins un élément parmi un tampon entre un avant du véhicule et un objet ou un tampon entre un côté du véhicule et un objet.

7. Procédé selon la revendication 6, dans lequel l'au moins un coût peut comprendre un coût de changement de voie ou un coût de courbure.

8. Procédé selon l'une quelconque des revendications précédentes, dans lequel, avant la fourniture des données associées au chemin sélectionné, l'au moins un processeur peut recevoir une modification apportée au chemin sélectionné via l'interface utilisateur graphique.

9. Procédé selon l'une quelconque des revendications précédentes, dans lequel l'interface utilisateur graphique fournit une représentation visuelle des caractéristiques présentes dans un environnement dans lequel le véhicule se trouve, la représentation visuelle comprenant des caractéristiques situées à moins d'une distance prédéterminée de chaque chemin candidat.

10. Procédé selon l'une quelconque des revendications précédentes, dans lequel chaque chemin candidat présenté dans l'interface utilisateur graphique comprend une pluralité de points de cheminement modifiables situés le long de la trajectoire et entre l'emplacement de départ et l'emplacement d'objectif.

11. Système (505) comprenant :
au moins un processeur, et
au moins un support de stockage non transitoire servant à stocker des instructions qui, lorsqu'elles sont exécutées par l'au moins un processeur, amènent l'au moins un processeur à réaliser le procédé selon l'une quelconque des revendications 1 à 10.

12. Au moins un support de stockage non transitoire servant à stocker des instructions qui, lorsqu'elles sont exécutées par l'au moins un processeur, amènent l'au moins un processeur à réaliser le procédé selon l'une quelconque des revendications 1 à 10.
